# EUROPEAN PATENT SPECIFICATION

(11) **EP 3 232 760 B1**
(45) Date of publication and mention of the grant of the patent: **03.04.2019**
(21) Application number: 15830905.4
(22) Date of filing: 14.12.2015
(51) Int. Cl.: A01B 63/02, A01B 69/00

(54) **METHOD OF CONTROLLING AN AGRICULTURAL IMPLEMENT AND AN AGRICULTURAL IMPLEMENT**
VERFAHREN ZUR STEUERUNG EINES LANDWIRTSCHAFTLICHEN ANBAUGERÄTS UND EIN LANDWIRTSCHAFTLICHES ANBAUGERÄT
PROCÉDÉ DE COMMANDE D'UN OUTIL AGRICOLE ET OUTIL AGRICOLE

(30) Priority: 16.12.2014 SE 1451558
(43) Date of publication of application: 25.10.2017
(73) Proprietor: Väderstad Holding AB, 590 21 Väderstad (SE)
(72) Inventor: ANDERSSON, Leif, 387 93 Borgholm (SE); THYLÉN, Lars, 582 21 Linköping (SE)
(74) Representative: AWA Sweden AB
(86) International application number: PCT/SE2015/051340
(87) International publication number: WO 2016/099386

(56) References cited:
- EP-A1- 2 322 023
- DE-C1- 3 345 231
- FR-A- 1 253 132
- US-A- 4 930 581
- US-A- 5 025 866
- US-A- 5 181 572
- US-A1- 2013 173 116

## Description

### TECHNICAL DOMAIN

This document relates to a method of adjusting an agricultural implement. The document also relates to a device for controlling an agricultural implement.

### BACKGROUND

Agricultural implements of various kinds are used for different purposes in farming. Such agricultural implements can, for example, be cultivating agricultural implements, agricultural implements for sowing or precision sowing, and/or agricultural implements for spreading fertilisers or pesticides. They can be connected to and pulled by a traction vehicle such as a tractor.

When these agricultural implements are moved forwards a deviation in relation to the agricultural implement's longitudinal direction can occur, i.e. the agricultural implement is not moved in line with the traction vehicle but drifts in some direction. This means that the required soil cultivation is not achieved and that the agricultural implement is therefore not fully fulfilling its function. For example, in the case of sowing there is a risk of sowing furrows, and therefore crops, ending up too close or overlapping each other, which also results in bare areas. When spreading fertilisers or pesticides their distribution over a field can be uneven which leads to reduced effectiveness of spreading. It can also result in the tools on the agricultural implement not cultivating the soil at an optimum level, but being positioned too high up or too deep down in the soil.

The fact that such divergences occur may for example be due to the agricultural implement being incorrectly set up in some way, variations in the hardness of the soil being tilled or to the fact that the field on which the agricultural implement is being used slopes in a certain direction.

An operator, such as the driver of the traction vehicle does not always notice skewing of the agricultural implement, which can lead to soil cultivation being ineffective, or in the worst case, having to be done again. Even if skewing is detected by the operator it is not always easy to decide how great the deviation is and how to overcome it.

There is therefore a requirement for an improved agricultural implement in which any skewing due to the operation of the agricultural implement can be compensated for. It is also desirable that this can be done during operation and in a manner that is fast, effective and simple for the operator to implement.

Prior art solutions are disclosed in US4930581, FR1253132, DE3345231C1, US5025866 and US5181572.

### SUMMARY

One aim is therefore to bring about a method and an agricultural implement which reduce or eliminate the problem of skewing.

The invention is defined by the independent claim with further forms of embodiment described in the dependent claims, the following description and the drawings.

In accordance with a first aspect, a method of controlling an agricultural implement is brought about, comprising moving the agricultural implement over a working area, identifying, while the implement is being moved, a deviation between a longitudinal direction of the agricultural implement and an actual advancing direction of the agricultural implement, bringing about an adjusting value if the deviation exceeds a threshold value and, based on the adjusting value, bringing about a control signal for at least one actuator on the agricultural implement so that the deviation is reduced or eliminated.

"Advancing direction" is taken to mean the direction in which the equipage, i.e. the agricultural implement and any traction vehicle is being moved. "Longitudinal direction" is taken to mean a direction parallel to the longitudinal horizontal central axis of the agricultural implement. The longitudinal direction is the direction in which the agricultural implement is intended to be advanced.

"Adjusting value" is taken to mean a value which indicates the extent to which adjustment of the skewing should take place. As a non-restrictive example, the adjusting value corresponds to an angle or a height setting value for tools or groups of tools, wheels, rollers or rolls. As a further non-restrictive example the adjusting value can correspond to a degree of efficiency or force of an actuator, a turning moment or an effect on driving, a braking force or suchlike.

Through identifying a deviation and making adjustments for it the problem can be fully or partially eliminated.

The deviation can be identified as an angle between for example the agricultural implement's advancing direction and its longitudinal direction. Alternatively the deviation can be identified in the form of a deviating distance between a side section of the agricultural implement and a corresponding side section a traction vehicle.

For example, the agricultural implement's orientation can be detected at a desired frequency. An adjustment of the longitudinal direction in relation to the advancing direction only needs to be carried out if there is a deviation that is sufficiently great. Adjustment of the orientation of the agricultural implement can take place both by an operator indicating a desired setting or automatically through a calculated adjusting value. This provides an effective and operator-friendly method with the the possibility of rapid correction of drifting of the agricultural implement. It is ensured that any deviation in the agricultural implement's position is detected and quickly rectified. Certain small deviations may be acceptable without any adjusting measures being required, for which reason a threshold value is used to decide whether the deviation is sufficiently great to require rectification.

Bringing about an adjusting value may involve generating an indication for the operator relating to the deviation, receiving an operator input relating to a required measure and calculating the adjusting value based on the at least one operator input.

In this way the operator is permitted to determine whether or not compensation should be carried out.

Bringing about an adjusting value may alternatively, or additionally, involve calculating and/or looking up an adjusting value based on at least the deviation.

It is, for example, possible to calculate the adjusting value with the aid of a formula and/or and algorithm. Alternatively or additionally it is also possible to look up an adjusting value in a reference table or a data memory which can be done at least partially empirically, for example by way of the adjusting value which has been shown to work for different skewing movements being stored.

The adjusting value can thus be calculated without involvement of the operator. Skewing and its compensation can be indicated to the operator, but does not require any decision by the operator.

The position and/or orientation of one or more tools on the agricultural implement can be changed on the basis of the control signal. The position and/or orientation can be changed with the aid of the actuator. For example, a depth of a tool can be changed. By changing the depth of a tool the traction resistance which the tool brings about on the agricultural implement can be increased or decreased, which in turn leads to an altered turning moment around a vertical axis of the agricultural implement. Skewing can thereby be countered.

The position and/or orientation of at least one wheel or roller on the agricultural implement can be changed on the basis of the control signal. The position and/or orientation can be changed with the aid of the actuator. Turning around at least one vertical axis of at least one wheel or one roller on the agricultural implement can be brought about on the basis of the control signal. Turning can be brought about by means of the actuator. For example co-steering (the wheel follows the track of the traction vehicle) or overcompensation (the implement is controlled to follow the tractor's advancing direction, for example if the tractor tilts) can take place.

In order to compensate for skewing it is possible to move at least one fastening point on a drawbar associated with the agricultural implement, preferably in a direction perpendicular to the advancing direction or in a direction perpendicular to the longitudinal direction. The movement can be brought about by means of the actuator.

One or more wheels, rollers or rolls of the agricultural implement can be selectively driven or braked on the basis of the control signal. The braking or driving can be brought about by means of the actuator.

Additionally, compensation for skewing can be brought about through changing, on the basis of the control signal, at least one angle, seen in a horizontal plane, between at least one part of the drawbar and a frame of the agricultural implement. The angle can be changed with the aid of the actuator.

The deviation can be identified on the basis of a measured angle between the agricultural implement and a traction vehicle to which the agricultural implement is coupled, and preferably also based on an actual advancing direction of the traction vehicle. "Actual advancing direction" is taken to mean the direction in which the traction vehicle is actually moving, which is not always parallel with the longitudinal direction of the traction vehicle.

Alternatively or additionally, the deviation can be identified on the basis of a distance between a side section of the agricultural implement and a corresponding side section of a traction vehicle to which the agricultural implement is coupled. Sides sections are taken to mean parts located at a horizontal distance perpendicular to the longitudinal direction of the agricultural implement and/or traction vehicle.

Alternatively or additionally, the deviation can be identified at least partially on the basis of determining the position of the agricultural implement's through using a global positioning system.

Also alternatively or additionally the deviation is identified at least partially on the basis of measuring one or more forces or turning moments acting on the agricultural implement. The forces can be forces that act on the agricultural implement though it being coupled to a traction vehicle.

The relevant value for determining any drifting of the agricultural implement can thus be measured by measuring angles at parts of or the whole appliance, by looking at its global position or through recording the size and direction of forces on positions on the implement, such as the fastening to the traction vehicle.

Alternatively or additionally the deviation can be identified based on at least one signal from a magnetometer, a gyro and/or an accelerometer.

Alternatively or additionally the deviation can be identified at least partially with the help of a least one soil-tracking component which can be turned relative to the agricultural implement.

As a further alternative or addition the deviation can be identified at least partially through obtaining a number of digital images of the soil over which the agricultural implement is travelling and determining the direction of movement and/or orientation of the agricultural implement on the basis of at least one soil structure shown on a number of the images.

In accordance with another aspect an agricultural implement is brought about: at least one sensor for identifying a deviation between a longitudinal direction of the agricultural implement and an actual advancing direction of the agricultural implement, a control unit arranged to receive at least one value from the sensor and an actuator for adjusting a part of the agricultural implement in order to eliminate or reduce the deviation, The actuator is controllable on the basis of a signal from the control unit. The control unit is set up to generate an adjusting value if the deviation exceeds a threshold value and to bring about a control signal for the actuator based on the adjusting value.

The control unit can be arranged to generate an adjusting value through bringing about a operator indication relating to the deviation, receiving an operator input relating to a required measure and calculating the adjusting value based on the at least one operator input.

Alternatively or additionally the control unit can be arranged to generate the adjusting value through calculating the adjusting value on the basis of at least the deviation.

The device can measure at least one value, which is used to decide whether the deviation in the agricultural implement's longitudinal direction in relation to the advancing direction is sufficiently large, thereby indicating drifting of the agricultural implement. If required, an indication that drifting is present can be sent to an operator who can then enter the adjustment the operator requires to compensate for the drifting. Alternatively the device can operated entirely automatically, with control signals based on the measured deviation being generated in order to make a suitable adjustment to the agricultural implement. An efficient and operator-friendly device is thereby achieved. Any deviations are detected and measures are taken quickly and effectively. In this way an operator, such as the driver of the traction vehicle is notified of the drifting of the agricultural implement. This makes for a better operator experience and improved use the the agricultural implement when a deviation is detected and the attention of the operator is drawn to this.

The actuator can be is arranged to act on a position and/or orientation of one or more tools on the agricultural implement. For example, influencing the position can bring about a change in the depth of the tool.

The actuator can be arranged to act on a position and/or orientation of at least one wheel, one roller or one roll of the agricultural implement.

The actuator can be arranged to act on the turning about at least one vertical axis of at least one wheel, one roller or one roll of the agricultural implement.

The actuator can be arranged to act on at least one fastening point on a drawbar associated with the agricultural implement, preferably in a direction perpendicular to the advancing direction or in a direction perpendicular to the longitudinal direction.

The agricultural implement can comprise at least one driven wheel and/or at least one braked wheel, wherein the actuator is arranged to act on the driving of said driving or driven wheel and/or said braked wheel, roller or roll.

The sensor can comprise at least one of the following, a gyrosensor, a magnetometer, an accelerometer, an angle sensor, a distance sensor, an inclinometer, and global positioning sensor and a force sensor.

At least one part of a drawbar on the agricultural implement can be articulated, seen horizontally, so that an angle between the section and a frame of the agricultural implement can be adjusted by means of the actuator.

The agricultural implement can further comprise at least one soil-tracking component, which can be turned relative to the agricultural implement, and wherein the sensor is arranged to detect an angle between the agricultural implement and the soil-tracking component.

Additionally or alternatively the sensor can comprise at least one camera which is arranged to produce a number of digital images of the soil over which the agricultural implement is travelling, wherein the control unit is arranged to determine the direction of movement and/or orientation of the agricultural implement on the basis of at least one soil structure shown on a number of the images.

### BRIEF DESCRIPTION OF THE DRAWINGS

Figs. 1a-1b show schematic views of an agricultural implement 1 pulled by a traction vehicle 2.
Figs. 2a-2b show a schematic perspective view and a schematic elevation view from the front of an agricultural implement in accordance with a first embodiment.
Figs. 3a-3b show a schematic perspective view and a schematic elevation view from the front of an agricultural implement in accordance with a second embodiment.
Figs. 4a-4b show a schematic perspective view and a schematic elevation view from the front of an agricultural implement in accordance with a third embodiment.
Fig. 5 shows a schematic elevation view from the front of an agricultural implement in a first scenario where skewing can occur.
Fig. 6 shows a schematic elevation view from the front of an agricultural implement in a second scenario where skewing can occur.
Fig. 7 shows a schematic view of an alternative system for the compensation of skewing.
Fig. 8 shows a schematic view of a further alternative system for the compensation of skewing.
Fig. 9 shows a schematic block diagram of a control system for an agricultural implement.

### DETAILED DESCRIPTION

When operating an agricultural implement 1 with soil-working tools, for example for sowing, cultivation, spreading of fertilisers and/or spreading of pesticides, the agricultural implement is usually moved by way of being towed behind a traction vehicle 2, a tractor for instance. When the agricultural implement 1 is being moved, the agricultural implement 1 should be orientated so that its advancing direction Rr is parallel to its longitudinal direction in order to achieve as efficient sowing, fertilisation and/or soil cultivation as possible.

Under certain circumstances it can happen that the agricultural implement 1 travels laterally in some direction so that its longitudinal direction deviates from its advancing direction Rr. The longitudinal direction L is the direction of an imaginary longitudinal horizontal axis through the centre of the implement. If the agricultural implement is in line with the traction vehicle 2 the longitudinal direction is in parallel with the advancing direction Rr.

The agricultural implement 1 can, for example, be affected by a laterally sloping field, varying hardness of the soil over which the agricultural implement is travelling and/or by the agricultural implement being incorrectly adjusted or incorrectly loaded in some way. When such a deviation occurs it is advantageous if this can be detected and rectified quickly and effectively, preferably during operation.

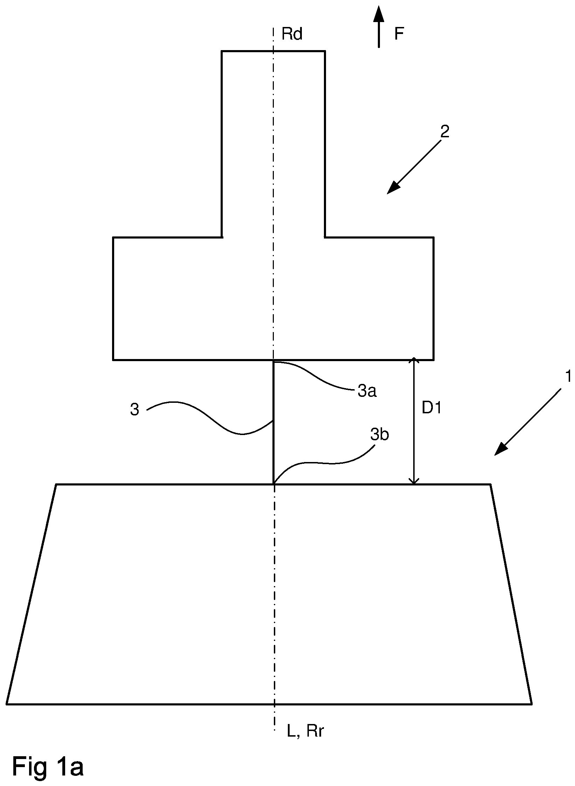

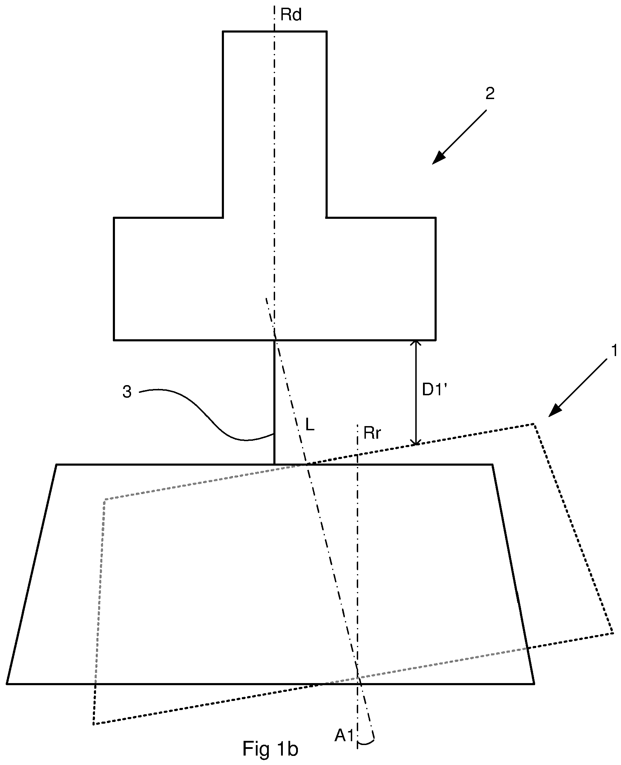

An agricultural implement 1 pulled by a traction vehicle 2 is shown in fig. 1a and 1b. In these figures a view of the equipage from above is shown.

Between the implement and the traction vehicle there is a connecting drawbar 3 with a pull coupling which connects to a point 3a on the traction vehicle and a point 3b on the agricultural implement. In an optimum situation the agricultural implement 1 advances in line with the traction vehicle 2 and in the same advancing direction Rd, Rr, as shown in fig. 1a. The agricultural implement 1 is therefore pivotable relative to the traction vehicle 2 about at least one vertical geometric axis (at the fastening point 3a). Preferably the agricultural implement 1 can also be pivoted relative to the traction vehicle about one horizontal geometric axis which is at right angles to the advancing direction. Such pivoting can also be present at fastening point 3a.

An illustration of how this can look when a deviation in the orientation of the agricultural implement occurs is shown in fig. 1b. Here it is illustrated how the agricultural implement moves sideways, or "skews" relative to the advancing direction. The longitudinal direction L of the agricultural implement is therefore no longer in parallel with the advancing direction Rr, but the agricultural implement 1 has a deviating orientation instead.

During skewing an angle A1 is formed between the advancing direction Rr and longitudinal direction L. A change in distance D1 also occurs between a side section of the agricultural implement and a section of the traction vehicle.

In accordance with a first embodiment skewing can be identified by measuring a distance between parts of the traction vehicle and agricultural implement 1 located at a distance from a centre line L, wherein a deviation in the distance indicates that skewing is taking place.

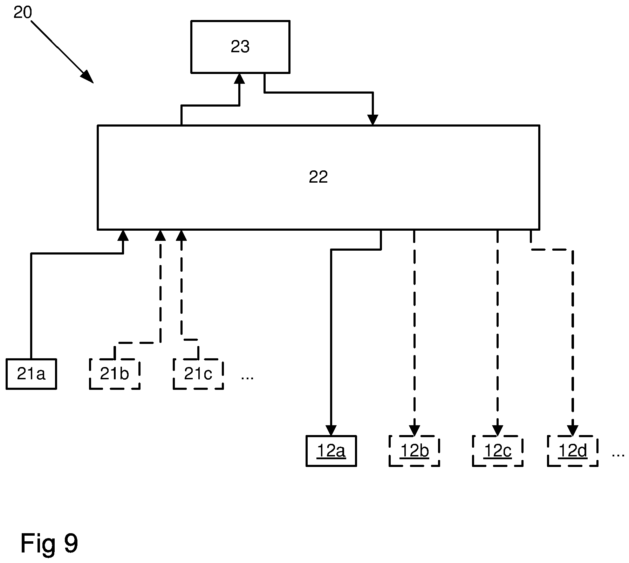

The measuring value can be forwarded to a control unit 20 which calculates the compensation that should be brought about and sends a control signal to a hydraulic control unit 40. The control unit 20 will be described in more detail with reference to fig. 9.

On several of the following drawings the traction vehicle has been omitted in order to make the drawings clearer.

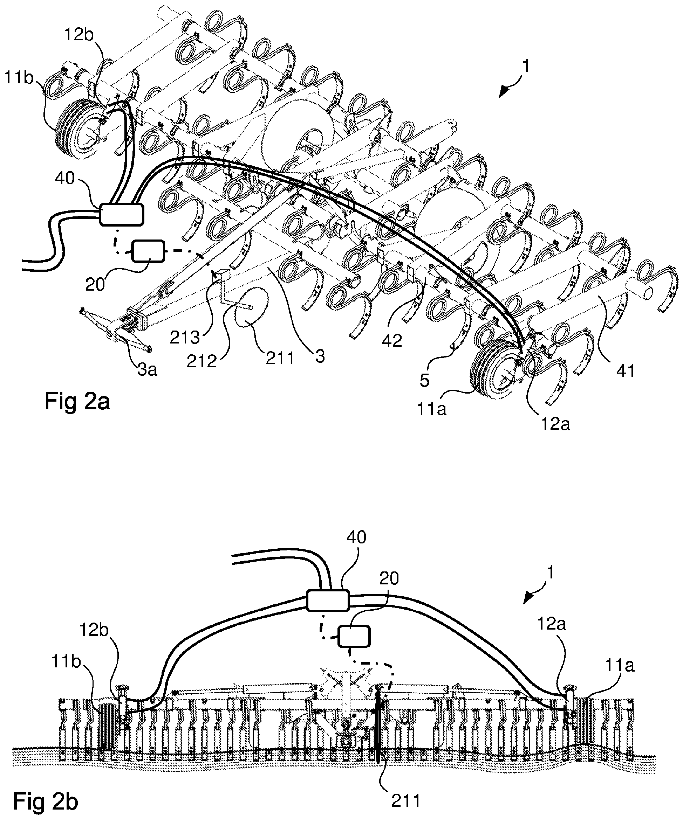

Figs. 2a and 2b show an agricultural implement in accordance with a second embodiment.

The agricultural implement 1 which is in the form of a cultivator, has a drawbar 3, a frame which can comprise a plurality of longitudinal beams 41 and plurality of transverse beams 42 as well as a number of soil-cultivating tools 5.

The agricultural implement 1 can also comprise one or more wheel(s) 11a, 11b, which can be individually height-adjusted relative to the frame 4 by means of an actuator, which in this case is in the form of hydraulic cylinders 12a, 12b. The wheels 11a, 11b are arranged at a distance from each other in the direction perpendicular to the longitudinal direction L and at a distance from the agricultural implement's longitudinal centre line.

The agricultural implement is also provided with sensors 211, 212 for detecting the agricultural implement's orientation L in relation to its advancing direction Rr.

In the embodiment shown in fig. 2a and 2b the sensor comprises a disk coulter 211 which is arranged on an arm 212 which extends downwards from the frame and horizontally from an axis of rotation so that that the disk coulter 221 can engage with the soil over which the agricultural implement is being advanced and adjust itself into the advancing direction Rr. A sensor 213 is arranged to record the rotation about the axis of rotation and to generate a signal with represents an angle between the advancing direction Rr and the longitudinal direction L of the agricultural implement. The disk coulter can be raised and lowered, for example to facilitate transportation on roads.

A control unit 20 receives the signal from the sensor 213 and emits a control signal to the actuators. In the shown example the control unit is connected to a hydraulic control unit 40. The hydraulic control unit can be be set up to receive hydraulic fluid from a central connection, for example from the traction vehicle 2 and selectively supply or receive hydraulic fluid to/from the hydraulic cylinders 12a, 12b in dependence on the control signal from the control unit 20.

In fig. 2b it is shown how the agricultural implement's left section passes with the wheel over a ridge which extends along the direction of travel and thereby lifts the tool on the left side of the agricultural implement up out of the soil, which results in the resistance on the left side being reduced. In fig. 2b it is also shown how the left hydraulic cylinder 12a (seen in the direction of travel - on the right of the picture) is drawn in in order to make the tool on the left side of the implement 1 go deeper which can compensate for the resistance being reduced on the left side or increased on the right side seen in the direction of travel.

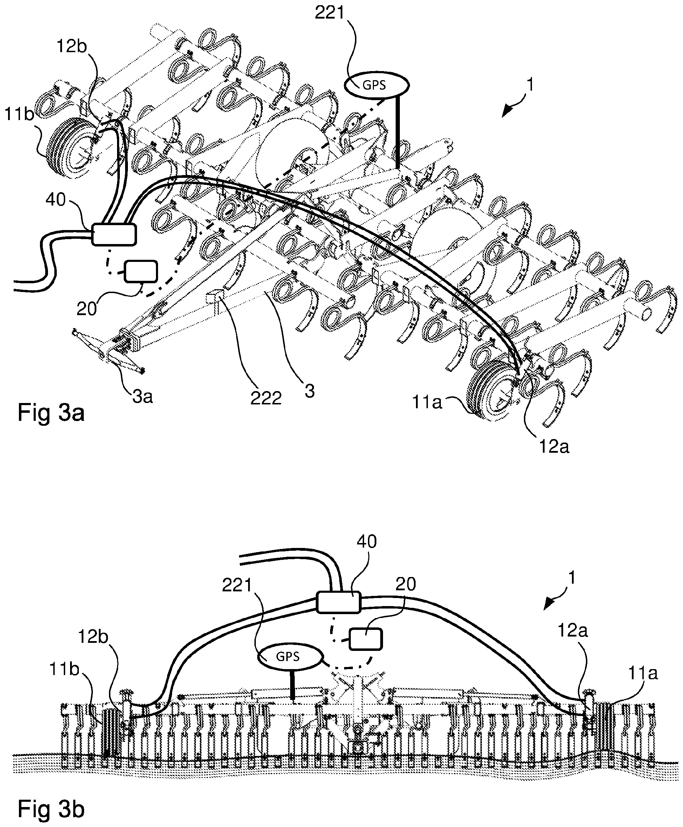

In figs. 3a-3b a third embodiment is shown in which signals fron a GPS sensor 221 are utilised to calculate the advancing direction. A magnetometer 220 can also be employed to determine the orientation of the agricultural implement, wherein the control unit 20 receives signals from the sensors 221, 222, calculates the appropriate value for control and sends out corresponding control signals to the hydraulic unit 40.

In fig. 3b, in a similar way to in fig. 2b, it is shown how compensation can be brought about.

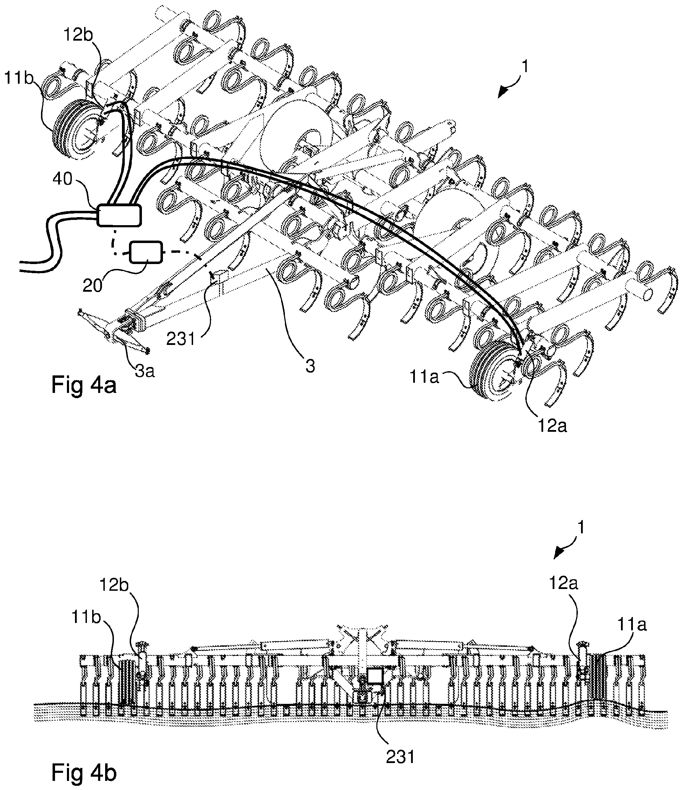

Figs. 4a-4b shows a fourth embodiment wherein a camera unit 231, which is directed downwards or inclined downwards is used to provide an indication of a relationship between the agricultural implement's advancing direction and its orientation. By identifying the position of an object or a structure (for example the soil surface) on images taken at short time intervals, and knowing where the camera or cameras is/are located on the implement 1, it is possible to calculate a movement vector relative to the ground, which corresponds to the advancing direction.

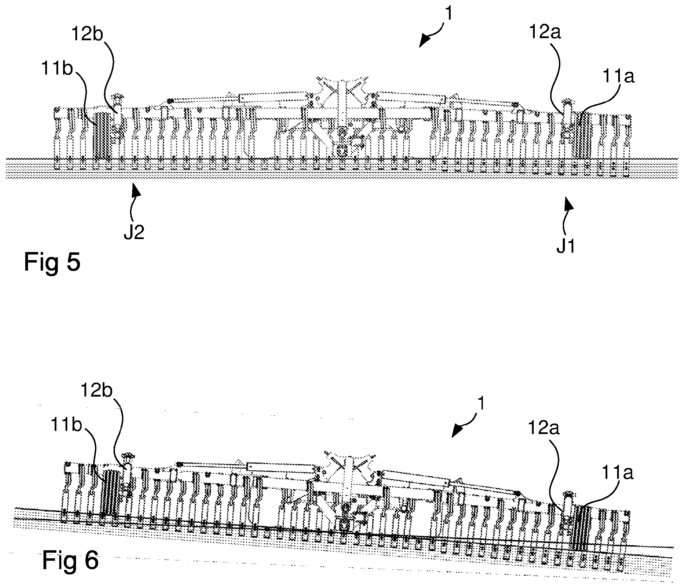

In fig. 5 it is shown how the left section (on the right in the picture) of an agricultural implement 1 is adjusted in that the actuator 12a is drawn in in order to reduce the vertical distance between the wheel 11a and the frame. On flat ground this can be utilised to compensate for variations in the hardness of the soil over the width of the agricultural implement. For example, the soil can be of different hardness and/or of different composition.

In fig. 6 it is shown how the left section (on the right in the picture) of an agricultural implement 1 is adjusted in that the actuator 12a is drawn in in order to reduce the vertical distance between the wheel 11a and the frame. In the case of a downward slope to the left (seen in the direction of travel), gravity tends to make the agricultural implement skew to the left, which can be compensated for by increasing the working depth on the left side and thereby increasing the tensile resistance on this side.

In the example shown above, a setting of the wheel of the agricultural implement 1 in contact with the soil has been utilised and thereby the operating depth of the tool used to compensate for the skewing.

It is evident that there are other ways of utilising some, or all, of the tools on the sides of an agricultural implement in order to compensate for skewing. For example, individual tools or groups of tools can be adjustable in terms of height and/or angle which can be utilised to increase or reduce the forces that act on the tool or tools when cultivating the soil.

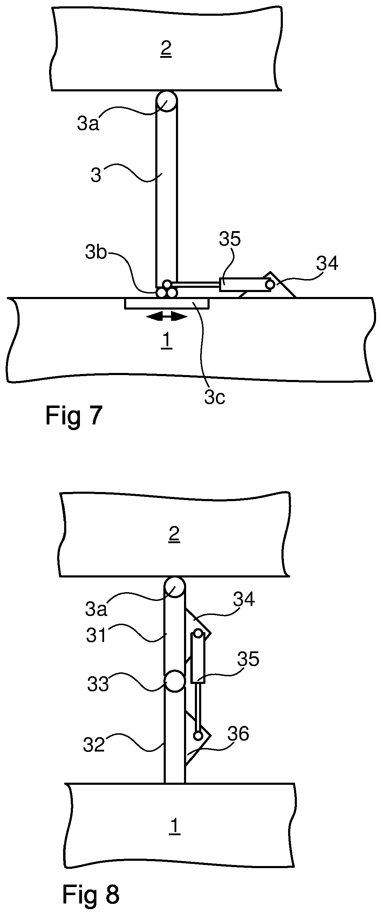

Fig. 7 shows a first additional manner of countering skewing. As previously described, the drawbar 3 has a coupling 3a to the agricultural implement, said coupling allowing the agricultural implement to turn relative to the traction vehicle 2 about at least one vertical axis. The drawbar 2 can also have a fastening point 3b to the frame of the agricultural implement, said fastening point being displaceable in at least one horizontal direction.

The fastening point 3b can include a linear bearing 3c and at least one actuator 35 which is set up to displace the fastening point 3b of the drawbar 3 in the frame of the agricultural implement in order to counter skewing. The actuator 35 can be attached in a fastening eye 34 which can be integrated in the frame.

When the implement 1 skews in either direction (to the right or left) the fastening point can be moved in that direction in order to compensate for the skewing.

If the implement 1 in fig. 7, skews, for example to the right in the picture, this can be compensated by the actuator 35 jutting out which results in the traction resistance increasing on the right side of the agricultural implement thereby countering the skewing.

Fig. 8 shows a second additional manner of countering skewing. The drawbar 3 comprises two parts: a front part 31 and a rear part 32 which can be rotated relative to each other about at least one vertical axis 33. An actuator 35 fastened on the front or rear parts 31, 32, by way of a fastening eye 34, 36 for example, is arranged to control the angular position of the parts relative to each other. Alternatively the actuator 35 can be attached to the frame of the agricultural implement instead of on the rear part 32 of the drawbar.

If the implement 1 in fig. 8, skews, for example to the right in the picture, this can be compensated by the actuator 35 jutting out which results in the implement being righted and thereby countering the skewing.

The agricultural implement shown in the drawings is composed of so-called cultivators, but it is clear that the arrangement and processes described herein can also be applied to other types of agricultural implements, including sowing machines.

A device 20 for controlling an agricultural implement is shown in fig. 9. One or more sensors 21a, 21b, 21c are mounted on or connected to the agricultural implement. Additional sensors can be arranged on the traction vehicle. These sensors can, for example, be in the form of a gyrosensor, accelerometer, magnetometer, angle sensor, distances sensor, inclinometer, global-positioning sensor (GPS or suchlike) or force sensors, i.e. sensors which detect the direction and size of force at a certain point.

A magnetometer (an electronic compass) can be used to determine the orientation of the agricultural implement relative to the Earth's magnetic field. This orientation can be compared with the advancing direction Rr.

A force sensor can be used to measure forces acting on tools or groups of tools on both sides of the agricultural implement. Alternatively, forces and/or turning moments on the drawbar can be measured and utilised to calculate whether the agricultural implement is skewing or not.

A sensor can either be used to record the agricultural implement's absolute orientation relative to the traction vehicle, or in relation to an advancing direction.

As a further example, a distance sensor can be used to determine the agricultural implement's angle relative to the traction vehicle.

As a further example, a GPS sensor or suchlike can be used to determine the agricultural implement's orientation relative to the traction vehicle.

Alternatively the agricultural implement's movements relative to an expected movement and/or movement of the traction vehicle can be recorded.

For example, one or more accelerometers or gyrosensors can be used to bring about a signal which indicates how the agricultural implement is moving laterally and/or how the agricultural implement is turning in a horizontal plane. A gyrosensor and/or an accelerometer can be used to identify the turning movement which occurs when the agricultural implement starts to skew.

As a further example a soil tracking component, such as a disk, a plate or a wheel which rotates freely about a vertical axis can be used. Preferably the soil tracking component is rotatable about a horizontal axis which is located at a horizontal distance from the vertical axis.

An angle sensor can be arranged to detect an angular position between the soil tracking component and the agricultural implement.

The values generated by the sensors can be received in a control unit 22 for further processing. The control unit can be a separate unit connected to the agricultural implement, either on the implement or in the traction vehicle.
The control unit can be integrated with control units for other functions on the agricultural implement and/or the traction vehicle. The control unit can also comprise a plurality of units in a distributed system which communicate with each other in a wired or wireless manner.

The values from the sensors can be used to determine whether there is a deviation between the longitudinal direction L of the agricultural implement and its advancing direction Rr. How great a value must be for the position to be considered as divergent is determined by comparison with at least one threshold value. If the threshold value is exceeded a deviation is considered to be present.

The threshold value can be adjustable, for example to avoid too small deviations generating any changes to the settings of the agricultural implement as small variations which do not require any measures to be taken are a normal occurrence during the operation of an agricultural implement.

For examples it can be made a condition that a certain threshold value has to be exceeded for a certain period of time. The period of time the threshold value has to be exceeded in order to generate measures can be proportional to the measured sensor value, for example so that a small deviation is tolerated for a longer time than a larger deviation.

The value generated by the sensor can also be a positive or negative value depending on which direction the deviation is taking place. It is also conceivable that the value can be a whole number, corresponding to a compass values for example, where 10 is equivalent to 10 degrees to the right and 350 is equivalent to 10 degree to the left.

If, on the basis of the above, it is determined that a deviation has occurred, an operator can be be informed thereof. This can take place through the control unit 22 sending information that a deviation has occurred to a receiver unit 23. The receiver unit 23 can, for example, be a unit mounted in the traction vehicle or a portable operator unit such as a mobile telephone, computer or tablet. The receiver unit can also comprise some form of alarm unit which forwards instructions to an indicating device in the traction vehicle such as a lamp or vehicle display.

The operator can be informed whether a deviation is present and also about the type and magnitude of the deviation. On the basis of this information, in accordance with one alterative, the operator can decide to take a measure and input instructions to the receiver unit, which forwards them to the control unit 22. Either the receiver unit 23 is used for inputting instructions, or a separate unit can be provided for his purpose.

Alternatively a deviation can be remedied automatically without the operator having to give any instructions. As stated above, such automatic rectification can be brought about based on the course and characteristics (right or left) of the deviation and any other external variables, such as speed, threshold value and/or admissible deviation period. It is also possible to use additional information such as position data. For example, compensation for a deviation may be superfluous just before a turn.

After having identified that there is a deviation and also its magnitude, the control unit 22 can generate and send control signals based on the detected deviation to one or more actuators 12a, 12b, 12c, 12b, which in turn act on one or more settings on the agricultural implement. The control signals can be sent directly to the the relevant actuators or to an actuator control unit (not shown) which initiates a supply of fluid, gas or electricity to the relevant actuators. Based on the received control signals one or more changes to the settings of the agricultural implement are thus made. A number of possible adjustments are conceivable in order to counter a deviation in the agricultural implement's longitudinal direction L in relation to the advancing direction Rr.

For example, the position and/or orientation of one or more tools on the agricultural implement can be changed. When a tool is adjusted, for example in terms of its depth, it can operate at a greater or reduced depth. In this way the forces that have a turning effect on the agricultural implement can be balanced out.

If the agricultural implement drifts to the right, as in fig. 1b, one or more tools on the right side of the agricultural implement can be made to go deeper, which increases the force making the agricultural implement turn in the opposite direction.

Alternatively or additionally, one or more tools on the left side can be make to be more shallow, whereby the force making the agricultural implement turn is reduced.

It is clear that tools can be adjusted individually or in groups. For example, all the tools on one section of the agricultural implement can be adjusted simultaneously by one or more actuators.

The agricultural implement can thus have at least two laterally separate tools or groups of tools which are adjustable relative to each other in terms of depth.

Alternative or additionally, the position and/or orientation of at least one wheel, one roller or one roll of the agricultural implement can be changed. Through such a change the depth of one or more tools can be affected.

The agricultural implement can thus have at least two laterally separate wheels, rollers or rolls or groups thereof which are adjustable vertically relative to each other.

Alternatively or additionally, at least one wheel, roller or roll can turn relative to the agricultural implement about a vertical axis, through which co-steering or overcompensation can take place which can counter the skewing.

The agricultural implement can thus have at least two laterally separate wheels, rollers or rolls or groups thereof which can rotate around at least one vertical geometric axis.

As a further alternative selective driving of at least one wheel, roller or roll can be brought about. Another alternative is to selectively brake one or more wheels, rollers or rolls.

The agricultural implement can thus have at least two laterally separate wheels, rollers or rolls or groups thereof which can be individually driven at different speeds and/or which can be braked individually.

In this way wheels on the side of the agricultural implement which during skewing end up "behind" the other side seen in the longitudinal direction can be driven with a higher rotational speed and/or turning moment than the wheels of the other side which end up in "ahead" in order to compensate for the skewing.

In an analogue manner, wheels ending up "ahead" can be braked to compensate for the skewing.

Signals in the device can be sent via wires or wirelessly with technology suitable for the circumstances, such as via electrical cables, optical cables, WiFi, Bluetooth and suchlike.

It is understood that deviations occurring as a result of skewing can be simply distinguished from deviations occurring as a result of skewing, as deviations as a result of skewing occur in spite of the fact that the agricultural implement and any traction vehicle is essentially moving straight ahead or turning in accordance with what is expected based on wheel deflection for example.

## Claims

1. Method of controlling an agricultural implement (1) comprising:
advancing the agricultural implement over a working area, identifying, while the implement is being moved, a deviation between a longitudinal direction (L) of the agricultural implement and an actual advancing direction (Rr) of the agricultural implement,
bringing about an adjusting value if the deviation exceeds a threshold value and,
based on the adjusting value, bringing about a control signal for at least one actuator (12a, 12b) on the agricultural implement so that the deviation is reduced or eliminated,
**characterised by**
with the aid of the actuator:
changing the position and/or orientation of one or more tools on the agricultural implement on the basis of the control signal, wherein the change brings about a change to the depth of the tool, and/or
bringing about turning around at least one vertical axis of at least one wheel or one roll on the agricultural implement on the basis of the control signal, and/or
selectively driving or braking one or more wheels (11a, 11b), rollers or rolls on the agricultural implement on the basis of the control signal, and/or
changing the position and/or orientation of at least one wheel or one roll on the agricultural implement on the basis of the control signal.

2. Method according to claim 1 wherein bringing about an adjusting value involves bringing about an indication for the operator relating to the deviation, receiving an operator input relating to a required measure and calculating the adjusting value based on the at least one operator input.

3. Method according to any one of the preceding claims also comprising bringing about moving at least one fastening point (3a, 3b) on a drawbar (3) associated with the agricultural implement, preferably in a direction perpendicular to the advancing direction (Rr) or in a direction perpendicular to the longitudinal direction (L).

4. Method according to any one of the preceding claims also comprising changing, on the basis of the control signal, at least one angle, seen in a horizontal plane, between at least one part of the drawbar and a frame of the agricultural implement (1).

5. Method according to any one of the preceding claims wherein the deviation is identified on the basis of a measured angle between the agricultural implement (1) and traction vehicle (2), and preferably also based on an actual advancing direction (Rd) of the traction vehicle (2).

6. Method according to any one of the preceding claims wherein the deviation is identified on the basis of a distance (D1) between a side section of the agricultural implement (1) and a corresponding side section of the traction vehicle (2).

7. Method according to any one of the preceding claims wherein the deviation is identified at least partially on the basis of determining the position of the agricultural implement (1) through using a global positioning system.

8. Method according to any one of the preceding claims wherein the deviation is identified at least partially on the basis of measuring one or more forces or turning moments acting on the agricultural implement.

9. Method according to any one of the preceding claims wherein the deviation is identified at least partially on the basis of a signal from a magnetometer, a gyro and/or a accelerometer.

10. Method according to any one of the preceding claims wherein the deviation is identified at least partially with the help of a least one soil tracking component (211) which can be turned relative to the agricultural implement (1).

11. Method according to any one of the preceding claims wherein the deviation is identified at least partially through obtaining a number of digital images of the soil over which the agricultural implement is travelling and determining the direction of movement and/or orientation of the agricultural implement on the basis of at least one soil structure shown on a number of the images.

12. Agricultural implement (1) comprising:
at least one sensor (21a, 21b, 21c) for identifying a deviation between a longitudinal direction (L) of the agricultural implement and an actual advancing direction (Rr) of the agricultural implement,
a control unit (22) arranged to receive at least one value from the sensor (21a, 22b, 22c), and
an actuator (12a, 12b) for adjusting a part of the agricultural implement in order to eliminate or reduce the deviation,
wherein the actuator (12a, 12b) is controllable on the basis of a signal from the control unit (22),
wherein the control unit (22) is set up:
to bring about an adjusting value if the deviation exceeds a threshold value and,
to bring about a control signal for the actuator (12a, 12b) based on the adjusting value,
**characterised in that**
the actuator (12a, 12b) is arranged to act on a position and/or orientation of one or more tools on the agricultural implement, so as to bring about a change to the depth of the tool,
the actuator (12a, 12b) is arranged to act on a position and/or orientation of at least one wheel, one roller or one roll of the agricultural implement,
the actuator (12a, 12b) is arranged to act on the rotation about at least one vertical axis of at least one wheel, one roller or one roll of the agricultural implement, and/or
the agricultural implement implement comprises at least one drive or driven wheel, roller or roll and/or at least one braked wheel, roller or roll, wherein the actuator (12a, 12b) is arranged to act on the driving of said drive or driven wheel, roller or roll and/or said braked wheel, roller or roll.

13. Agricultural implement according to claim 12 the control unit is arranged to bring about an adjusting value through bringing about an indication for the operator relating to the deviation, receiving an operator input relating to a required measure and calculating the adjusting value based on the at least one oparator input.

14. Agricultural implement according to claim 12 or 13 wherein the actuator (12a, 12b) is arranged to act on at least one fastening point (3a, 3b) on a drawbar (3) associated with agricultural implement, preferably in a direction perpendicular to the advancing direction (Rr) or in a direction perpendicular to the longitudinal direction (L).

15. Agricultural implement according to any one of claims 12-14 wherein at least one part (31) of a drawbar (3) on the agricultural implement is articulated, seen horizontally, so that an angle between the section (31) and a frame of the agricultural implement (1) can be adjusted by means of the actuator (12a, 12b).

## Patentansprüche

1. Verfahren zum Steuern eines landwirtschaftlichen Gerätes (1), das Folgendes umfasst:
Ziehen des landwirtschaftlichen Gerätes über eine Arbeitsfläche,
Identifizieren, während das Gerät bewegt wird, einer Abweichung zwischen einer Längsrichtung (L) des landwirtschaftlichen Gerätes und einer tatsächlichen Zugrichtung (Rr) des landwirtschaftlichen Gerätes,
Erzeugen eines Justierwertes, wenn die Abweichung einen Schwellenwert überschreitet, und
auf der Basis des Justierwertes, Erzeugen eines Steuersignals für mindestens einen Aktuator (12a, 12b) an dem landwirtschaftlichen Gerät so, dass die Abweichung reduziert oder beseitigt wird,
**gekennzeichnet durch**,
mit Hilfe des Aktuators:
Ändern der Position und/oder Orientierung eines oder mehrerer Werkzeuge an dem landwirtschaftlichen Gerät auf der Basis des Steuersignals, wobei die Änderung eine Änderung der Tiefe des Werkzeugs bewirkt, und/oder
Veranlassen einer Drehung um mindestens eine vertikale Achse mindestens eines Rades oder einer Rolle an dem landwirtschaftlichen Gerät auf der Basis des Steuersignals, und/oder
selektives Antreiben oder Bremsen eines oder mehrerer Räder (11a, 11b), Walzen oder Rollen an dem landwirtschaftlichen Gerät auf der Basis des Steuersignals, und/oder
Ändern der Position und/oder Orientierung mindestens eines Rades oder einer Rolle an dem landwirtschaftlichen Gerät auf der Basis des Steuersignals.

2. Verfahren nach Anspruch 1, wobei das Erzeugen eines Justierwertes Folgendes beinhaltet: Erzeugen eines Hinweises für den Maschinisten bezüglich der Abweichung, Empfangen einer Eingabe des Maschinisten bezüglich einer erforderlichen Maßnahme, und Berechnen des Justierwertes auf der Basis der mindestens einen Eingabe des Maschinisten.

3. Verfahren nach einem der vorangehenden Ansprüche, das des Weiteren Folgendes umfasst: Veranlassen der Bewegung mindestens eines Befestigungspunktes (3a, 3b) an einer Ackerschiene (3), die mit dem landwirtschaftlichen Gerät verbunden ist, bevorzugt in einer Richtung senkrecht zu der Zugrichtung (Rr) oder in einer Richtung senkrecht zu der Längsrichtung (L).

4. Verfahren nach einem der vorangehenden Ansprüche, das des Weiteren Folgendes umfasst: Ändern, auf der Basis des Steuersignals, mindestens eines Winkels, in einer horizontalen Ebene betrachtet, zwischen mindestens einem Teil der Ackerschiene und einem Rahmen des landwirtschaftlichen Gerätes (1).

5. Verfahren nach einem der vorangehenden Ansprüche, wobei die Abweichung auf der Basis eines gemessenen Winkels zwischen dem landwirtschaftlichen Gerät (1) und einem Zugfahrzeug (2) identifiziert wird, und bevorzugt auch auf der Basis einer tatsächlichen Zugrichtung (Rd) des Zugfahrzeugs (2).

6. Verfahren nach einem der vorangehenden Ansprüche, wobei die Abweichung auf der Basis einer Distanz (D1) zwischen einer Seitensektion des landwirtschaftlichen Gerätes (1) und einer entsprechenden Seitensektion des Zugfahrzeugs (2) identifiziert wird.

7. Verfahren nach einem der vorangehenden Ansprüche, wobei die Abweichung mindestens teilweise auf der Basis des Bestimmens der Position des landwirtschaftlichen Gerätes (1) unter Verwendung eines Global Positioning System identifiziert wird.

8. Verfahren nach einem der vorangehenden Ansprüche, wobei die Abweichung mindestens teilweise auf der Basis des Messens einer oder mehrerer Kräfte oder Drehmomente, die auf das landwirtschaftliche Gerät wirken, identifiziert wird.

9. Verfahren nach einem der vorangehenden Ansprüche, wobei die Abweichung mindestens teilweise auf der Basis eines Signals von einem Magnetometer, einem Kreisel und/oder einem Beschleunigungsmesser identifiziert wird.

10. Verfahren nach einem der vorangehenden Ansprüche, wobei die Abweichung mindestens teilweise mit Hilfe mindestens einer Bodenspurverfolgungskomponente (211) identifiziert wird, die relativ zu dem landwirtschaftlichen Gerät (1) gedreht werden kann.

11. Verfahren nach einem der vorangehenden Ansprüche, wobei die Abweichung mindestens teilweise durch Erhalten einer Anzahl digitaler Bilder des Bodens, über den das landwirtschaftliche Gerät fährt, und Bestimmen der Bewegungsrichtung und/oder Orientierung des landwirtschaftlichen Gerätes auf der Basis mindestens einer Bodenstruktur, die auf einer Anzahl der Bilder gezeigt wird, identifiziert wird.

12. Landwirtschaftliches Gerät (1), das Folgendes umfasst:
mindestens einen Sensor (21a, 21b, 21c) zum Identifizieren einer Abweichung zwischen einer Längsrichtung (L) des landwirtschaftlichen Gerätes und einer tatsächlichen Zugrichtung (Rr) des landwirtschaftlichen Gerätes,
eine Steuereinheit (22), die dafür ausgelegt ist, mindestens einen Wert von dem Sensor (21a, 22b, 22c) zu empfangen, und
einen Aktuator (12a, 12b) zum Justieren eines Teils des landwirtschaftlichen Gerätes, um die Abweichung zu beseitigen oder reduzieren,
wobei der Aktuator (12a, 12b) auf der Basis eines Signals von der Steuereinheit (22) gesteuert werden kann,
wobei die Steuereinheit (22) dafür ausgelegt ist:
einen Justierwert zu erzeugen, wenn die Abweichung einen Schwellenwert überschreitet, und
ein Steuersignal für den Aktuator (12a, 12b) auf der Basis des Justierwertes zu erzeugen,
**dadurch gekennzeichnet, dass**
der Aktuator (12a, 12b) dafür ausgelegt ist, auf eine Position und/oder Orientierung eines oder mehrerer Werkzeuge an dem landwirtschaftlichen Gerät zu wirken, um eine Änderung der Tiefe des Werkzeugs herbeizuführen,
der Aktuator (12a, 12b) dafür ausgelegt ist, auf eine Position und/oder Orientierung eines mindestens eines Rades, einer Walze oder einer Rolle des landwirtschaftlichen Gerätes zu wirken,
der Aktuator (12a, 12b) dafür ausgelegt ist, auf die Rotation um mindestens eine vertikale Achse mindestens eines Rades, einer Walze oder einer Rolle des landwirtschaftlichen Gerätes zu wirken, und/oder
das landwirtschaftliche Gerät mindestens ein Antriebsrad oder ein angetriebenes Rad, eine Antriebswalze oder eine angetriebene Walze oder eine Antriebsrolle oder eine angetriebene Rolle und/oder mindestens ein gebremstes Rad, eine gebremste Walze oder eine gebremste Rolle umfasst, wobei der Aktuator (12a, 12b) dafür ausgelegt ist, auf das Antreiben des Antriebsrades oder angetriebenen Rades, der Antriebswalze oder angetriebenen Walze oder der Antriebsrolle oder angetriebenen Rolle und/oder mindestens des gebremsten Rades, der gebremsten Walze oder der gebremsten Rolle zu wirken.

13. Landwirtschaftliches Gerät nach Anspruch 12, wobei die Steuereinheit dafür ausgelegt ist, einen Justierwert zu erzeugen durch: Erzeugen eines Hinweises für den Maschinisten bezüglich der Abweichung, Empfangen einer Eingabe des Maschinisten bezüglich einer erforderlichen Maßnahme, und Berechnen des Justierwertes auf der Basis der mindestens einer Eingabe des Maschinisten.

14. Landwirtschaftliches Gerät nach Anspruch 12 oder 13, wobei der Aktuator (12a, 12b) dafür ausgelegt ist, auf mindestens einen Befestigungspunkt (3a, 3b) an einer Ackerschiene (3), die mit dem landwirtschaftlichen Gerät verbunden ist, bevorzugt in einer Richtung senkrecht zu der Zugrichtung (Rr) oder in einer Richtung senkrecht zu der Längsrichtung (L) zu wirken.

15. Landwirtschaftliches Gerät nach einem der Ansprüche 12-14, wobei mindestens ein Teil (31) einer Ackerschiene (3) an dem landwirtschaftlichen Gerät - in der Horizontalen betrachtet - so geknickt ist, dass ein Winkel zwischen der Sektion (31) und einem Rahmen des landwirtschaftlichen Gerätes (1) mittels des Aktuators (12a, 12b) justiert werden kann.

## Revendications

1. Procédé de commande d'un appareil agricole (1) comprenant :
l'avancée de l'appareil agricole dans une zone de travail,
l'identification, pendant que l'appareil est en cours de déplacement, d'un écart entre un sens longitudinal (L) de l'appareil agricole et un sens d'avancée réel (Rr) de l'appareil agricole,
l'application d'une valeur d'ajustement si l'écart dépasse une valeur de seuil, et
sur la base de la valeur d'ajustement, l'application d'un signal de commande pour au moins un actionneur (12a, 12b) sur l'appareil agricole de manière à réduire ou éliminer l'écart,
**caractérisé par**
à l'aide de l'actionneur :
le changement de la position et/ou de l'orientation d'un ou plusieurs outils sur l'appareil agricole sur la base du signal de commande, dans lequel le changement applique un changement à la profondeur de l'outil, et/ou
l'application d'une rotation autour d'au moins un axe vertical d'au moins une roue ou un rouleau sur l'appareil agricole sur la base du signal de commande, et/ou
l'entraînement ou le freinage sélectivement d'une ou plusieurs roues (11a, 11b), d'un ou plusieurs galets ou d'un ou plusieurs rouleaux sur l'appareil agricole sur la base du signal de commande, et/ou
le changement de la position et/ou de l'orientation d'au moins une roue ou un rouleau sur l'appareil agricole sur la base du signal de commande.

2. Procédé selon la revendication 1, dans lequel l'application d'une valeur d'ajustement implique l'application d'une indication à l'opérateur en ce qui concerne l'écart, la réception d'une entrée d'opérateur en ce qui concerne une mesure nécessaire et le calcul de la valeur d'ajustement sur la base de l'au moins une entrée d'opérateur.

3. Procédé selon l'une quelconque des revendications précédentes, comprenant également l'application d'un déplacement d'au moins un point de fixation (3a, 3b) sur une barre d'attelage (3) associée à l'appareil agricole, de préférence dans un sens perpendiculaire au sens d'avancée (Rr) ou dans un sens perpendiculaire au sens longitudinal (L).

4. Procédé selon l'une quelconque des revendications précédentes, comprenant également le changement, sur la base du signal de commande, d'au moins un angle, en vue dans un plan horizontal, entre au moins une partie de la barre d'attelage et un châssis de l'appareil agricole (1).

5. Procédé selon l'une quelconque des revendications précédentes, dans lequel l'écart est identifié sur la base d'un angle mesuré entre l'appareil agricole (1) et le véhicule de traction (2), et également de préférence sur la base d'un sens d'avancée réel (Rd) du véhicule de traction (2).

6. Procédé selon l'une quelconque des revendications précédentes, dans lequel l'écart est identifié sur la base d'une distance (D1) entre une section latérale de l'appareil agricole (1) et une section latérale correspondante du véhicule de traction (2).

7. Procédé selon l'une quelconque des revendications précédentes, dans lequel l'écart est identifié au moins partiellement sur la base de la détermination de la position de l'appareil agricole (1) par l'utilisation d'un système de positionnement mondial.

8. Procédé selon l'une quelconque des revendications précédentes, dans lequel l'écart est identifié au moins partiellement sur la base de la mesure d'une ou plusieurs forces ou d'un ou plusieurs moments de rotation agissant sur l'appareil agricole.

9. Procédé selon l'une quelconque des revendications précédentes, dans lequel l'écart est identifié au moins partiellement sur la base d'un signal provenant d'un magnétomètre, d'un gyroscope et/ou d'un accéléromètre.

10. Procédé selon l'une quelconque des revendications précédentes, dans lequel l'écart est identifié au moins partiellement à l'aide d'au moins un composant de repérage de sol (211) qui peut être tourné par rapport à l'appareil agricole (1).

11. Procédé selon l'une quelconque des revendications précédentes, dans lequel l'écart est identifié au moins partiellement par l'obtention d'un nombre d'images numériques du sol sur lequel l'appareil agricole se déplace et la détermination du sens de déplacement et/ou de l'orientation de l'appareil agricole sur la base d'au moins une structure de sol indiquée sur un certain nombre des images.

12. Appareil agricole (1) comprenant :
au moins un capteur (21a, 21b, 21c) pour l'identification d'un écart entre un sens longitudinal (L) de l'appareil agricole et un sens d'avancée réel (Rr) de l'appareil agricole,
une unité de commande (22) agencée pour la réception d'au moins une valeur en provenance du capteur (21a, 21b, 21c), et
un actionneur (12a, 12b) pour l'ajustement d'une partie de l'appareil agricole afin d'éliminer ou de réduire l'écart,
dans lequel l'actionneur (12a, 12b) peut être commandé sur la base d'un signal provenant de l'unité de commande (22),
dans lequel l'unité de commande (22) est configurée pour :
l'application d'une valeur d'ajustement si l'écart dépasse une valeur de seuil, et
l'application d'un signal de commande pour l'actionneur (12a, 12b) sur la base de la valeur d'ajustement,
**caractérisé en ce que**
l'actionneur (12a, 12b) est agencé pour agir sur une position et/ou une orientation d'un ou plusieurs outils sur l'appareil agricole, de manière à appliquer un changement à la profondeur de l'outil,
l'actionneur (12a, 12b) est agencé pour agir sur une position et/ou une orientation d'au moins une roue, un galet ou un rouleau de l'appareil agricole,
l'actionneur (12a, 12b) est agencé pour agir sur la rotation autour d'au moins un axe vertical d'au moins une roue, un galet ou un rouleau de l'appareil agricole, et/ou
l'appareil agricole comprend au moins une roue, un galet ou un rouleau d'entraînement ou entraîné et/ou au moins une roue, un galet ou un rouleau freiné, dans lequel l'actionneur (12a, 12b) est agencé pour agir sur l'entraînement de la roue, du galet ou du rouleau d'entraînement ou entraîné et/ou de la roue, du galet ou du rouleau freiné.

13. Appareil agricole selon la revendication 12, dans lequel l'unité de commande est agencée pour appliquer une valeur d'ajustement par l'application d'une indication à l'opérateur en ce qui concerne l'écart, la réception d'une entrée d'opérateur en ce qui concerne une mesure nécessaire et le calcul de la valeur d'ajustement sur la base de l'au moins une entrée d'opérateur.

14. Appareil agricole selon la revendication 12 ou 13, dans lequel l'actionneur (12a, 12b) est agencé pour agir sur au moins un point de fixation (3a, 3b) sur une barre d'attelage (3) associée à l'appareil agricole, de préférence dans un sens perpendiculaire au sens d'avancée (Rr) ou dans un sens perpendiculaire au sens longitudinal (L).

15. Appareil agricole selon l'une quelconque des revendications 12 à 14, dans lequel au moins une partie (31) d'une barre d'attelage (3) sur l'appareil agricole est articulée, en vue horizontale, de sorte qu'un angle entre la section (31) et un châssis de l'appareil agricole (1) puisse être ajusté au moyen de l'actionneur (12a, 12b).
